# EUROPEAN PATENT SPECIFICATION

(11) **EP 4 399 693 B1**
(45) Date of publication and mention of the grant of the patent: **15.04.2026**
(21) Application number: 22768492.5
(22) Date of filing: 06.09.2022
(51) Int. Cl.: G06V 20/52

(54) **VISION-BASED SPORTS TIMING AND IDENTIFICATION SYSTEM**
VISION-BASIERTES SYSTEM ZUR ZEITMESSUNG UND IDENTIFIZIERUNG VON SPORTLERN
SYSTÈME DE CHRONOMÉTRAGE ET D'IDENTIFICATION DES SPORTIFS BASÉ SUR LA VISION

(30) Priority: 06.09.2021 NL 2029136
(43) Date of publication of application: 17.07.2024
(73) Proprietor: MyLaps B.V., 2012 PJ Haarlem (NL)
(72) Inventor: VERWOERD, Adriaan Klaas, 2012 PJ Haarlem (NL); PENE, Cosmin Octavian, 2012 PJ Haarlem (NL)
(74) Representative: Bird & Bird LLP - Hamburg
(86) International application number: PCT/NL2022/050504
(87) International publication number: WO 2023/033653

(56) References cited:
- EP-A1- 3 792 815
- US-A1- 2021 073 563
- ZHUO JIAXUAN ET AL: "Occluded Person Re-Identification", 2018 IEEE INTERNATIONAL CONFERENCE ON MULTIMEDIA AND EXPO (ICME), IEEE, 23 July 2018 (2018-07-23), pages 1 - 6, XP033417644, DOI: 10.1109/ICME.2018.8486568
- PAJAR MUHAMMAD ET AL: "A Novel Method for Handling Partial Occlusion on Person Re-identification using Partial Siamese Network", IJACSA) INTERNATIONAL JOURNAL OF ADVANCED COMPUTER SCIENCE AND APPLICATIONS, vol. 12, 31 July 2021 (2021-07-31), XP055908603

## Description

### Field of technology

The disclosure relates to vision-based sports timing and, in particular, though not exclusively, to methods and systems for vision-based sports timing and identification system, and a computer program product enabling a computer system to perform such methods.

### Background

Sports events such as car- or motor racing, cycling, athletics, drones and ice-skating, typically require accurate and fast time registration for tracking objects (persons or vehicles) during the event. Such timing system is usually based on an RFID system, wherein each participant in the event is provided with an RFID transponder, e.g. an UHF back scattering tag or an LF tag based on magnetic induction, which can be read out by RFID readers that are positioned along the track. Such readers may be implemented in the form of an antenna mat, side antenna's and/or antenna's mounted on a frame above a track. Each transponder is configured to transmit packets at a certain frequency and to insert a unique identifier into the packet such that a detector is able to associate a packet with a certain transmitter. Drawbacks related to timing systems based on RFID technology include the necessity to provide every participant with an UHF tag, the sensitivity of UHF signals to environmental influences, e.g. moisture and rain, the detuning of UHF tags when it is positioned close to the human body, reflection of UHF signals by 'hard' objects, e.g. street surface, walls, etc. and collisions of UHF signals when a large number of participants simultaneously pass an RFID detector, e.g. an RFID antenna mat, that is provided across the track.

WO2021/048446 describes an example of a vision-based timing system for measuring a passing time for participants in a mass sports event, wherein a large number of participants may simultaneously or almost simultaneously pass a virtual timing line. The system includes one or more camera's that capture images of participants passing the virtual timing line. The system may further include a processor that is configured to analyze the images, i.e. detect objects such as participants in a sports event, in the images, and to determine a passing time for detected objects that pass the virtual timing line. Further, based on the captured images, the processor is configured to detect identification information carrier, e.g. identification number and/or symbols (e.g. a QR code or the like) printed on a so-called BIB that is attached to the clothing of the participant, and to associate the detected identification information to the passing time of a participant. The advantage of such vision-based timing system is that it does not exhibit the drawbacks of RFID-based timing systems as mentioned above.

While the vision-based timing system allows accurate determination of passing times of participants passing the virtual timing line, some challenges still exist in order to accurately time and identify all participants that pass the virtual timing line. In particular, even though the cameras positioned at the timing line can accurately capture images of participants passing the line, there is a non-zero chance that not all detected participants can be identified based on the captured images because the BIB number will be visually blocked or at least partly block by passing participants. This makes accurate and reliable determining and identification of participants passing a timing line, e.g. a start line or a finish line, particular challenging, especially when dealing with mass sports events (e.g. a marathon or the like) wherein high detection accuracies are required for example detection accuracies of more than 99,9% . Additionally, different privacy regulations add further technical challenges in that data, especially biometric data, may only be used under stricture conditions.

Hence, from the above, it follows that there is a need in the art for improved vision-based timing of sports events, that allows highly accurate and reliable determination of passing times and identification of participants in a sports event, in particular mass sports events.

### Summary

As will be appreciated by one skilled in the art, aspects of the present invention may be embodied as a system, method or computer program product, as defined in independent claims 1, 12, 13 and 15 respectively. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to reduce or eliminate at least one of the drawbacks known in the prior art. In an aspect, the invention may relate to a method for timing and identifying objects participating in a sports event. In an embodiment, the method may comprise: receiving first image information associated with one or more first images captured by a first camera system of a first timing system located at a first position along a sports track, the one or more first images comprising objects participating in the sports event passing a virtual timing line, the first image information comprising visual information about at least a first object for which a passing time is determined based on the one or more first images but which cannot be identified based on the one or more first images; receiving or retrieving second image information associated with one or more second images captured by a second camera system located at a different position than the first position, the one or more second images comprising objects participating in the sports event, the second image information comprising visual information about one or more objects that can be identified based on the one or more second images; and, identifying the first object, wherein the identifying includes: using the first and second image information to determine a second object in the one or more second images that matches the first object; and, if the second object is determined, identifying the first object based on visual information of the second object.

Thus, the method provides an accurate vision-based timing and identification process for timing and identifying objects in a sports events, e.g. athletes and vehicles, passing a virtual timing line. The method uses visual information of multiple timing systems or a timing system and one or more camera system to time and identify mass events with accuracies that are similar to the accuracy provided by state-of-the-art RFID systems. Virtual timing lines may be easily set up at multiple locations along the track and easily connected to the central sever system, that registers the passing times of detected objects and re-identifies timed objects that could not be identified by a first timing system using visual information provided by one or more further cameras located at different positions along the sports track.

In an embodiment, the first image information may comprise at least part of one of the one or more first images comprising the first object or at least one picture of a first region of interest ROI in one of the one or more first images, the first ROI comprising at least part of the first object. Hence, a picture of an object in the one or more images for which a passing time is determined but could not be identified by the first timing system based on the one or more first images is sent to a server that includes an application which is configured to identify the non-identified object based on further images of the objects. This way, a visual timing system can be realized that has a very high success rate of timed and identified objects that pas the virtual timing line.

In an embodiment, the first image information may further comprise timing information indicative of a time instance the first object passes the virtual timing line, depth information indicative of a distance between the first camera system and the first object; and/or an identifier associated with the first ROI. Hence, metadata associated with the non-identified may be sent to the server, which is used by the server application.

In an embodiment, the determining a second object in the one or more second images may be based on a re-identification algorithm, the re-identification algorithm being configured to compare the first object with the objects in the one or more second images based on object features.

In an embodiment, the object features are non-biometric object features, such as colour and/or design of clothes or shoes.

In an embodiment, the determining a second object in the one or more second images may include: determining one or more first object features associated with the first object; determining one or more second object features associated with objects in the second image; and, determining if one of the objects in the one or more second images matches the first object in the one or more first images based on the one or more first and second object features.

In an embodiment, the matching may be based on a distance measure that is computed based on the first and second object features, the distance measure being indicative of a similarity between the first object and an object in the second image. Hence, objects in different images captured by different camera systems are compared and matches based on object features.

In an embodiment, objects in the one or more first and second images represent persons participating in the sports event and wherein the first and second object features define features of a person participating in the event, including non-biometric features, such as color of the clothes, long or short sleeves or pants, color of the shoes and biometric information, such as height, color of skin, gender, long or short hair; or, wherein objects in the one or more first and second image represent vehicles participating in the sports event and wherein the first and second object features define features of a vehicle participating in the event, such as color of the vehicle, shape of the vehicle, numbers and/or characters on the vehicle.

In an embodiment, the identification of the first object further may include; searching for a visual identification marker or a visual identification code based on visual information of the second object; and, if a visual identification marker or visual identification code is found, transforming the identification marker or identification code into identification information for linking the second object to an identity, for example a name; and, associating the first object with the identification information; and, storing the identification information and the timing information of the first object in a database. Hence, in this embodiment, the server application may include an identification algorithm, e.g. an fast OCR algorithm, for receiving visual information about an identification marker or identification code, e.g. a BIB or a QR code or the like, which transform the visual information into identification information, e.g. a BIB number or a vehicle number.

In an embodiment, the second image information may include identification information associated with the second image; and, wherein the identification of the first object may further include; associating the first object with the identification information; and, storing the identification information and the timing information of the first object in a database. Hence, in this embodiment, the objects in the second image are identified by an image processing module of the second camera system so that identification information associated with the objects in the one or more second images can be sent to the server system. This way, the server system does not need to execute an identification process itself, but can rely on information that was already determined by the second camera system.

In an embodiment, the method may further comprise: receiving timing information and identification information associated with objects in the one or more first images that have been detected, timed and identified by the first timing system based on the one or more first images. In this embodiment, information about the timed and identified objects in the first images is sent to the server.

In an embodiment, the second camera system includes a computer or a processor that is configured to determine visual information about one or more objects that can be identified based on the one or more second images.

In an embodiment, the second camera system may be part of a second timing system configured to determine passing times of objects participating in the sports event passing a virtual timing line.

In an embodiment, the first image information may include an image frame comprising the detected non-identified object. In another embodiment, the first image information may include a ROI picture comprising the detected non-identified object that is cropped out of an image frame generated by the first camera system.

This way, only the relevant information is transmitted thereby substantially reducing the bandwidth that is needed for transmitting the image information to the sever system. In a further embodiment, the first image information includes a time stamp indicating a passing time of the detected non-identified object.

In a further aspect, the invention may relate to a method for timing and identifying objects participating in a sports event comprising: receiving by a server system, a first image information associated with one or more first images captured by a first camera system of a first timing system located at a first position along a sports track, the one or more first images comprising objects associated visual identification marker or code participating in the sports event passing a virtual timing line, the first image information comprising visual information of at least a first object for which a passing time is determined based on the one or more first images but which cannot be identified based a visual identification marker or code in the one or more first images; receiving or retrieving by the server system, second image information associated with one or more second images captured by a second camera system located at a different position than the first position, the one or more second images comprising objects participating in the sports event, the second image information comprising visual information about one or more objects that can be identified based on a visual identification marker or code in one or more second images; and, identifying by the server system, the first object, wherein the identifying includes: using the first image information and second image information to determine a second object in the one or more second images that matches the first object, the determining being based on first non-biometric object features associated with the first object and second non-biometric object features associated with the second object; and, if the second object is determined, identifying the first object based on a visual identification marker or code of the second object.

In a further aspect, the invention may relate to a vision-based sports timing system for timing and identifying objects participating in a sports event comprising: a camera system configured to capture images of a scene comprising objects on a sport track passing a virtual timeline at a first location along a race track; and, a computer connected to the camera system wherein the computer is configured to: detect objects in the images captured by the camera system; determine depth information associated with images, the depth information defining a relative distance between the camera system and detected objects; determine passing times at which detected objects pass the virtual timing line based on the timing information and the depth information; identify detected objects; and, if an object cannot be detected based on the images, generating image information, the image information comprising visual information of the object that cannot be identified; and, transmit the image information and a passing time associated with the non-identified object to a server system for further processing.

In an embodiment, the server system may include a server application configured to identify the non-identified object based on the image information and further image information associated with one or more further images of objects participating in the sports event captured by a further camera system located at a different position than the first position.

In an embodiment, objects may be detected in the images using an instance object segmentation algorithm based on deep neural network. In an embodiment, the instance object segmentation algorithm may be based on a R-CNN, fast R-CNN, faster R-CNN, mask R-CCN algorithm or related algorithms. Such algorithm is capable of detecting and classifying objects in an image in (almost) real-time.

In an embodiment, identification of an object may be based on an optical character recognition (OCR) algorithm, or an optical code recognition algorithm may be used to recognize (printed) identification markers in a ROI. In an embodiment, the identification markers may include printed characters. In an embodiment, the printed characters may be only visible using an infrared camera.

In a further embodiment, identification of an object may be based on an algorithm that is configured to identify an object based on biometric features, e.g. a face recognition algorithm that is configured to identify persons based on facial features.

In an embodiment, the camera system may be configured as a 3D camera or a stereo camera comprising two or more camera modules. In an embodiment, the camera system may be configured to capture images in the visible spectrum and images in the infrared spectrum.

In a further aspect, the invention relates to a system for timing and identifying objects participating in a sports event comprising: a first timing system comprising a first camera system connected to or comprising a first computer, wherein the first timing system is configured to generate first image information associated with one or more first images captured by the first camera system located at a first position along the sports track, the one or more first images comprising objects passing the virtual timing line, the first image information comprising visual information about at least a first object for which a passing time is determined based on the one or more first images but which cannot be identified based on the one or more first images; one or more second camera systems, each camera system being connected to or comprising a second computer, wherein the one or more second camera systems are configured to generate second image information associated with one or more second images captured by the second camera system located at a different position than the first position, the one or more second images comprising objects participating in the sports event, the second image information comprising visual information about one or more objects that can be identified based on the one or more second images; and, a server system configured to receive the first and second image information and to identify the first object, wherein the identification includes: using the first and second image information to determine a second object in the one or more second images that matches the first object; and, if the second object is determined, identifying the first object based on visual information of the second object.

In an embodiment, the first timing system and the one or more second camera systems are configured to wirelessly communicate with the server system, preferably the first timing system and the one or more second camera systems forming a communications network.

In an embodiment, the one or more second camera systems may form a wireless network, preferably a mesh network, a star network or cellular networks. In another embodiment, communication between the timing systems and the server system may be based on a wireless communication standard, for example Zigbee, LoRa, LoRaWAN, 5G.

In an embodiment, each of the one or more second camera systems, may be part of a vision-based timing system, preferably a vision-based timing system as described with reference to the embodiments in this application.

In an embodiment, the system may include a plurality of timing systems arranged along a track, wherein the timing systems are wirelessly connected to the server system.

The invention may also relate to a computer program or suite of computer programs comprising at least one software code portion or a computer program product storing at least one software code portion, the software code portion, when run on a computer of the timing system, being configured for executing any of the method steps described above.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic of part of a vision-based timing system;
**Fig. 2** depict a network of timing systems according to an embodiment;
**Fig. 3** depicts a high-level schematic of a timing and identification process according to an embodiment;
**Fig. 4** illustrates object detection and identification during a timing and identification process according to an embodiment;
**Fig. 5** illustrates object re-identification during a timing and identification process according to an embodiment;
**Fig. 6** depicts a process of determining a passing time for objects passing a virtual timing line according to an embodiment;
**Fig. 7** illustrates a generic process flow of a timing and identification process according to an embodiment;
**Fig. 8** depicts a system for timing and identifying objects passing a virtual timing line according to an embodiment;
**Fig. 9** is a block diagram illustrating an exemplary data processing system that may be used for executing methods and software products described in this application.

### Detailed description

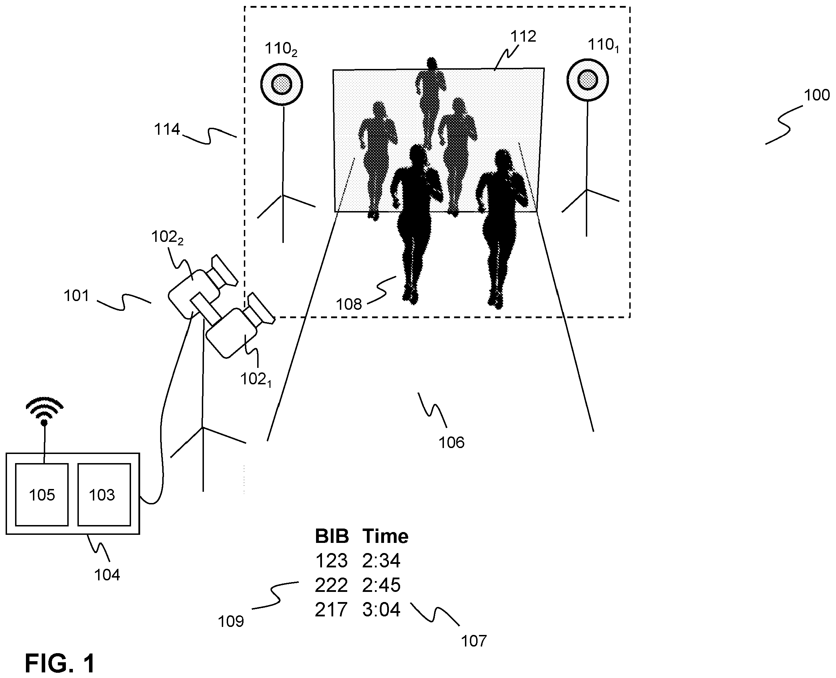

**Fig. 1** depicts an example of a timing system that may be used in the embodiments as described in this application. In particular, the figure depicts a timing system **100** including a camera system **101** controlled by a computer system **104.** Each camera system may be configured to capture images (video frames) of a scene of a sports track **106,** wherein the scene may include objects, e.g. persons, animals or vehicles participating in a sports event, and to determine depth information associated with the captured images. For example, in an embodiment, the depth information may include one or more so-called depth maps associated with video frames generated by an image sensor of the camera system. The depth map of a video frame, e.g. an RGB video frame, may be represented as a pixelated image comprising pixel values representing a distance value for each pixel of a video frame. The distance value may define a distance between the camera (the imaging plane of the camera) and objects in the video frames.

For example, a group of pixels in a video frame may be part of an object in the scene that is imaged by the camera system. In that case, the depth map may indicate the relative distance between the camera (the viewpoint) and the surface of the object in the scene. Hence, during capturing of a sequence of time-stamped video frames of an object, e.g. an athlete or a vehicle that is moving along the sports track, the associated depth maps may provide information about the distance between the moving object in the video frames and the (static) camera system as a function of time.

Camera systems that are capable of generating depth information, e.g. a depth map associated with one or more images, are known. For example, a camera system may be implemented as a 3D camera system e.g. stereo camera system. Typically, such camera systems may have two or more camera modules, wherein each camera module has its own lens system. This way, the camera system is configured to simultaneously capture multiple (i.e. two or more) images of the same scene from different points of view. In an embodiment, the camera system may have two separate camera module as e.g. depicted in **Fig. 1****.** In another embodiment, the camera system may include one housing comprising two camera modules. Such stereo camera may be used to determine depth maps and/or 3D pictures. A 3D camera system may have more than two camera modules so that multiple images can be used to compute a depth map. This way the accuracy of the depth information can be improved.

The camera systems used in the embodiments of this application are not limited to stereo based-imaging techniques and other imaging techniques may be used as well. For example, a depth map may be generated based on an RGB / infrared (IR) technique (as used by the Kinect) or a 3D time-of-flight (TOF) technique, LIDAR or combinations thereof, wherein infrared radiation, e.g. an IR camera or IR laser, may be used to determine depth information of a scene that is captured by a camera. In some embodiments, the camera system may be an color-infrared camera configured to capture image of the visible spectrum (e.g. RGB) and the infrared (IR) spectrum to capture images of objects. For example, the use of an infrared images may be advantageous when light conditions are not optimal, e.g. due to weather conditions (e.g. fog, rain, etc.) or during twilight.

To increase the angel of view of the camera system, in some embodiments, one or more wide angle camera modules may be used, e.g. a 180-degree camera or a 360-degree camera. Also, for such type of video formats, such as 360-video or immersive video, which is generated using special 360 camera systems, wherein the video is projected onto a 2D video frame using e.g. an equirectangular projection, depth maps can be generated. To enable accurate image processing, the camera's used in the timing system may have a frame-rate of at least 30 frames per second or more. Depending on the application, the frame rate may be at least 60 frames per seconds or more. Additionally, the camera may be a high-resolution camera having an image resolution of 4K or more.

As shown in **Fig. 1****,** the camera system may include multiple camera modules **102_{1,2}** positioned at the side(s) and/or above the sports track. The camera modules may be aligned and calibrated such each of the camera module captures the same scene **114** of the sports track, including objects moving along the track. To that end, one or more calibration markers **110_{1,2}** may be used which may be positioned above the track and/or along one side or both sides of the track. The one or more calibration markers may be used by the timing system to determine coordinates of a virtual timing reference **112.** Based on the implementation, the virtual timing reference may define a virtual timing line or a virtual timing plane arranged at a distance z from the camera system. A virtual timing line may be used when determining a passing based on two coordinates, e.g. an object passing the time line at position x or based on three coordinates, e.g. part of an object passing the time line at position x and height y. A virtual timing plane may for example be used to determine a passage time when a specific part of an object has passed the virtual timing plane. For example, for certain use cases it is desired to determine a passing time when a specific part of an object, e.g. the chest of an athlete comprising the BIB passes the virtual timing plane.

Below, whenever reference is made to virtual timing line, other types of virtual timing references such as a virtual timing plane should also be included. The timing line may be arrange across the track at the position of the one or more calibration markers. For example, when using two calibration markers, the virtual timing line may be positioned between the two calibration markers.

Examples of (the use of) calibration markers and the calibration process are described in more detail in WO2021/048446.

After calibration, the relative distance between the camera system and virtual timing line is known, so that - in action - the markers can be removed unless they need to be used for re-calibration, e.g. when a camera needs to be reset or when the camera is moved. This allows the timing system to determine on the basis of time-stamped video frames and associated depth maps at what time instance a moving object, e.g. a participant in a sports event, has passed the virtual timing line. This way, accurate passing times of participants in a sports event may be obtained.

The computer system **104** may be configured to control the camera system to capture images, typically sets of images, of objects passing the virtual timing line. In some embodiments, the computer may comprise an image processing module **103** configured to process and analyze at least part of the images captured by a camera system. In particular, in some embodiments, the image processing module may be configured to analyze the images, e.g. detect an object in the images and to classify an object in the images and determine a passing time, i.e. a time instance at which a detected object passes the virtual timing line.

The image processing module may further be configured to identify an object based one or more object features associated with the object. Here, object identification refers to the process of assigning an identity, typically personal data (e.g. name of a person, an animal, a vehicle or a team that is stored prior to the event in a database), to a detected object based on these object features. An example of an object feature is a number on the BIB **109** of a participant. When a participant registers himself with a sports event, he will receive identification information, e.g. identification number such as a BIB number, which may be used by the timing system to link data, e.g. information about passing times **107,** to personal data, e.g. a name of a registered participant, that is stored in a central database. Different object features may be used to link an object to an identity. For example, in case the objects represent persons, object features may include (but is not limited to) (a part of) a race BIB, colors, biometric information, visual identification codes, e.g. a QR code, object items, such as shoes, shirts, branding marks, etc. In case the objects represent vehicles, object features may include characteristics of the vehicle, e.g. number, color, shape, branding marks, license or registration plate, etc. The computer may include or be connected to a wireless radio module **105** for wirelessly connecting the timing system to a further computer system (not shown), e.g. a remote computer system e.g. a server system, which is configured to centrally process determined passing times of detected and identified objects.

Although the timing system depicted in **Fig. 1** is configured to determine the passing times of objects passing the virtual timing line, identifying substantially all timed objects with accurate detection rates, e.g. an accuracy rate of 99,9% or more, that pass the virtual timing line is particular challenging. This is because there is there is a substantial chance that not all detected objects in an image can be identified by the timing system. Failure for detecting an object may be caused by object features associated with an object, i.e. attributes of an object such as a BIB number that are used for associating a detected object with an identity, may be visually blocked or at least partly blocked by other objects in the image and/or by image quality issues. Thus, the image processing module of the timing system may not be able to determine sufficient object features for identifying all objects in an image, so that some objects cannot be identified by the timing system. This makes fast, accurate and reliable vision-based timing and identification by a vision-based timing system of all participants that pass a virtual timing line, (e.g. a start line or a finish line) particular challenging.

The embodiments in this application relate to methods and systems for timing and identifying objects participating in a sports event passing a virtual timing line across the sports track based on visual information in one or more first images captured by a first camera system of a vision-based timing system and based on visual information of objects in one or more further second images captured by one or more further camera systems which are located at locations that are different from the location of the first camera system. In particular, timed objects in the first image that cannot be identified based on visual information in the one or more first images may be identified based on visual information of the objects in the one or more further second images. The identification of non-objects may be performed by an algorithm that runs on a further computer system, e.g. a central server system or a cloud platform. To that end, the timing system and one or more further camera systems may be connected to the further computer system.

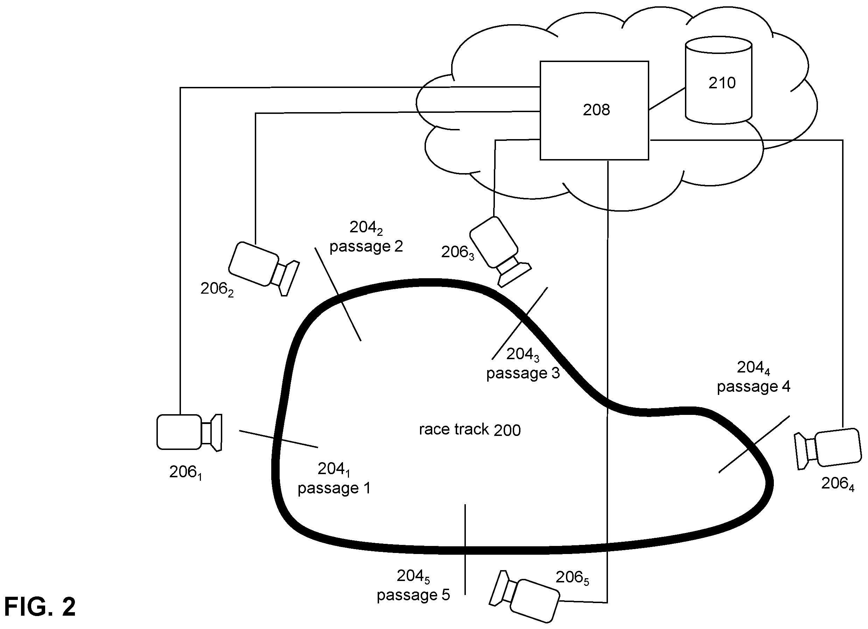

In some embodiments, each or at least part of the further camera systems may be part of a further timing system for determining a passing time of objects passing a virtual timing line at different locations of the racetrack. This way, a network of timing systems as illustrated in **Fig. 2** may be formed. This figure depicts a sports track **200** and timing systems **206₁₋₃** arranged at different locations **204₁₋₃** along the track. The network may be implemented based on various network configurations, including but not limited to mesh works, star networks, cellular networks, etc.). Further, any suitable communication standards (Zigbee, LoRa, LoRaWAN, 5G, etc.) for operating the network may be used.

As described with reference to **Fig. 1****,** each timing system may include a camera system comprising one or more camera modules and a computer or a processor, which includes an image processing module configured to determine a passage time based on time-stamped images of objects passing a virtual timing line. The timing systems may share a common clock so that passing times at different positions along the track have a common time basis. This way, a wireless network of timing systems may be formed, wherein the further computer system may be used for receiving and collecting timing information, i.e. passage times of detected objects, and for receiving image information of detected objects that could be identified by a timing system and objects that could not be identified by the timing system..

If not all objects in a first image of a first timing system are identified by the first timing system, first image information associated with the objects that could not be identified by the timing system based on the visual information in the first image may be transmitted by the timing system to the remote computer system. The first image information may comprise, for example, one or more pictures of one or more region of interests (ROIs) in the first image, wherein each ROI comprises at least part of an object that could not be identified. Such picture may be cropped or copied out of the first image. The first image information may further include information about the pictures, for example object or ROI identifiers, IDs, for enabling the system to distinguish between different objects in an image and information at which time the image was captured.

The further computer system may be configured as a server system including a server application that is configured to receive image information from timing systems. For example, it may receive the first image information associated with the one or more first images and second image information associated with one or more further second images comprising objects that participate in the event and that can be identified based on the visual information in the one or more second images. Here, the second image may be captured by a camera system of another timing system that may be positioned at another location along the track or a camera system that is installed at a location where objects enter the track.

Then, the server application may be configured to compare a non-identified object in a first image with objects in the one or more second images to determine if the non-identified object in the first image matches (i.e. is similar or identical to) an object in one of the one or more second images. If there is a match, the server application may identify the non-identified object in the first image based on one or more object features of the object in a second image that matches the non-identified object in the first image.

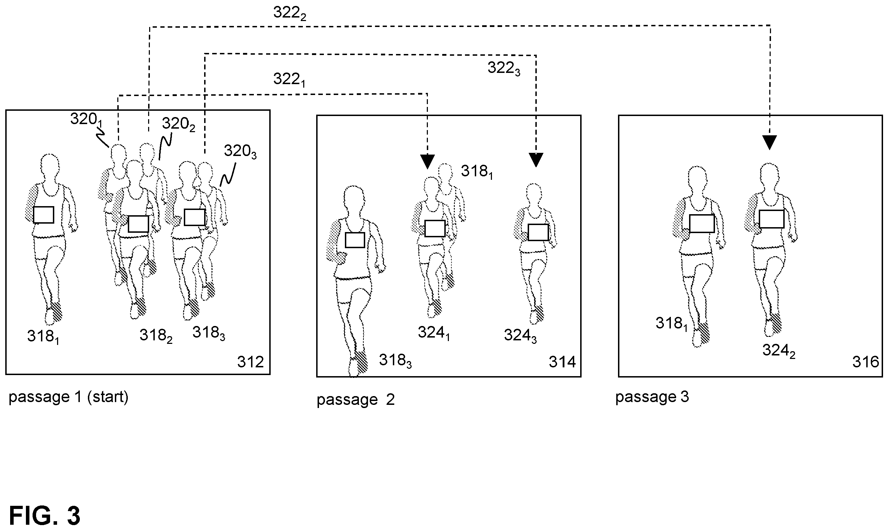

This way, the success rate of the identification of objects passing a particular virtual timing line, for example the timing line that is used for starting the sports event, can be substantially increased. A high-level schematic of the identification process executed by the server application is illustrated in **Fig. 3****,** which depicts three different images, each being captured by a different camera system. For example, a first image **312** may be captured by a first camera system of a first timing system at e.g. the start of the track (passage 1), while second and third images **314,316** may be captured by a second and third camera system positioned at a second position (passage 2) and third position (passage 3) along the track respectively. The first and second camera systems may be part of a second and third timing system.

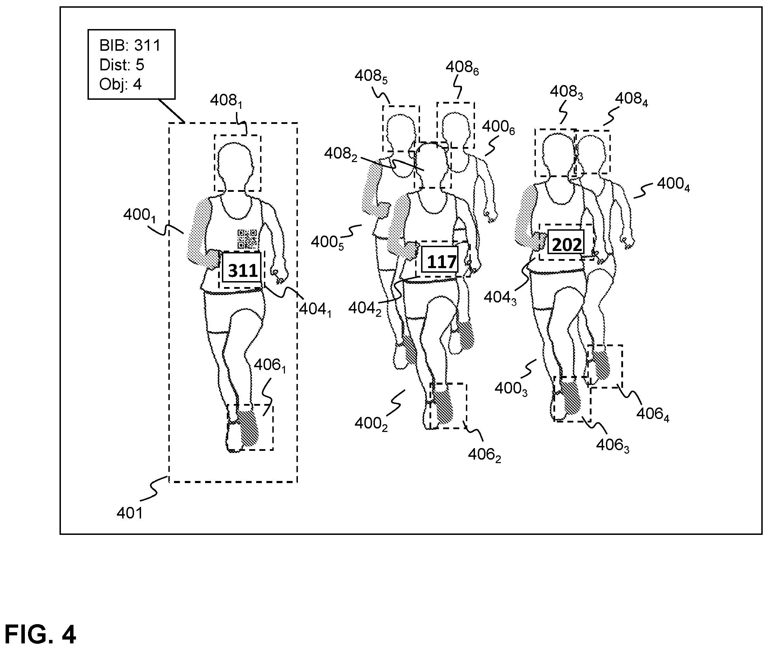

The image processing module may include an object detection algorithm for detecting objects in the first image, in this example six objects **318₁₋₃**, **320₁₋₃**, passing a virtual timing line. In particular, an instance object segmentation algorithm may be used to detect and delimit an object in an image from other objects in the image. As shown in **Fig. 4****,** instance segmentation allows detection of multiple objects **400₁₋₆**, e.g. athletes or vehicles, of the same class wherein each detected object may be treated as an individual instance. The instance segmentation algorithm may determine a bounding box defining a region of interest ROI **401** (for clarity reasons only the ROI of the first object is depicted in the figure) in the image that includes the detected object. The ROI comprising the detected object may be labelled with an object identifier ID, e.g. a unique number assigned to an object by the algorithm that is used by the system to distinguish different detected objects of the same class in one image.

This way, objects in an image, such as athletes, cars, bikes, etc. may be accurately and efficiently detected and classified and represented as labelled ROIs in an image. In an embodiment, information about the ROIs and the IDs may be added or linked as metadata to an image. Efficient instance object segmentation algorithms based on deep learning may be used, including but not limited to algorithms such as R-CNN, fast R-CNN or faster R-CNN or related algorithms, which are capable of detecting and classifying objects in an image in (almost) real-time. An overview of state-of-the-art instance segmentation algorithms is provided in the article by A. Hafiz et al, A survey on Instance Segmentation: State of The Art, International Journal of Multimedia Information Retrieval volume 9, pages171-189 (2020). These algorithms provide very efficient run-time performance so that they can be executed locally, e.g. using the computer of the timing system.

To speed up the object detection and identification process, the CPU-based local computer of the timing system that runs the image processing module may include one or more special purpose processors, e.g. one or more graphical processing units GPUs, tensor processing units TPUs or field programmable gate arrays FPGAs, which may be especially adapted to accelerate computations, in particular computations associated with neural networks, performed by the various image processing algorithms.

A detected object in an image may be identified, i.e. associated with an identity, based one or more object features such as identification markers **404₁₋₃** (e.g. BIBs, QR codes, printed text, symbols, etc.) that are specifically used for identifying the object, biometric information **408₁₋₆** (e.g. facial features, age, gender, length, hair color, etc.) and/or non-biometric object items **406₁₋₆** that are specific for a particular object (e.g. color and/or design clothes and/or shoes or color and/or shape of a vehicle). These object features may define visual identification information that can be used by the timing system to identify an object that passes a virtual timing line.

The ROIs may be analyzed by one or more algorithms that are configured to detect object features in a ROI and extracting identification information from the ROI. For example, an optical character recognition (OCR) algorithm may be used to recognize (printed) identification markers in a ROI. Typically, an OCR algorithm may include a text detection algorithm and a text recognition algorithm. These printed identification markers may be based on characters and/or symbols, such as example numbers and/or characters on a BIB or a vehicle. Alternatively, and/or in addition, a code detection algorithm may be used to detect and encode a visual code, typically a standardized code, in a ROI. For example, BIB or clothes of an athlete may include a QR code or a variant thereof, in which identification information is encoded as (for example) a geometrical structure. Further, a face detection and recognition algorithm may be used for identifying a person in a ROI based on facial features.

In some embodiments, a pose estimation algorithm which is configured to identify a pose of an object. For example, in an embodiment, a pose estimation algorithm may determine key joints (shoulders/hips/knees/head) of an object, which may be used to identify possible locations in a ROI that may represent object identification features, i.e. features of an object that can be used for identification. For example, based on the location of the key joints, specific parts of a body, e.g. chest, arm, head, legs or feet, may be determined. Based on the locations of the key joints, locations within a ROI may be determined that have a high chance of comprising one or more object features, e.g. a face, a chest or feet.

If no or not sufficient object features of an object in an image can be determined, identification is not possible solely based on information in the one or more first images. For example, based on first image in **Fig. 3** only three objects **318₁₋₃** may be identified because for these objects sufficient object features can be determined (e.g. in the form of a visible BIB and maybe other information), while the other detected objects **320₁₋₃** cannot be identified because not sufficient object features can be determined for reliably identifying these objects. When the timing system is not capable of identifying all objects in an image, it will transmit image information associated with the non-identified objects to the server application.

Depending on the implementation and/or use case, the image information may include different types of information. For example, in an embodiment, the image information may include the image that was captured and metadata identifying objects in the image that could not be identified, e.g. locations of ROIs in the image comprising a non-identified object. Further, in an embodiment, the image information may include identifiers IDs associated with the ROIs so that the system can distinguish between the different ROls. In another embodiment, instead of an image, a picture of each detected non-identified object may be cropped out of the image. This way, only the relevant information is transmitted thereby substantially reducing the bandwidth that is needed for transmitting the image information to the sever system. In a further embodiment, timing information, e.g. a time stamp, indicating a passing time of an object or indicating the time the picture was capture, may be sent to the server application.

The server application will try to identify the non-identifiable objects based on image information from different image sources, e.g. a second and third image **314,316,** comprising objects that participate in the event. These images may be captured by one or more further camera systems that capture pictures of the objects as described with reference to **Fig. 2****.** The identification process executed by the server application may include a re-identification process, which is configured to look for an object in a second image **314** and/or third image **316** that matches (i.e. is similar or identical to) a non-identified object in the first image. For example, matching non-identified objects **320₁₋₃** in the first image to objects in the second and third image that have sufficient object features, may enable the server application to identify non-objects objects that are timed by the first timing system. Increasing the number of images of objects captured by different camera systems may further reduce the rate of missed identifications by the timing system. The image information that is

Although the example in **Fig. 2** and **3** illustrate an example of a system that is configured to improve the identification rate of timed participants at the start, it is clear that the scheme may also be used to improve the identification rate of other passing times, e.g. a passing time related to a certain timing system at a certain position along the track that is part of the network of timing system arranged along the race track.

The re-identification process executed by the server system may be configured to compare objects, typically pictures of ROIs comprising objects, detected in different non-overlapping images of different camera systems located at different locations and determine a similarity measure between the compared objects. Hence, objects may be imaged by different camera systems under different conditions (light, angle, distance, quality, etc.). The algorithm may be configured to detect objects in different images originating from different cameras and determine object descriptors for each detected object. Here, an object descriptor may provide a high-level description of an object based on multiple features, in particular object features, of an object. An object descriptor may have form of a set of values, wherein each value may indicate a certain confidence value regarding a certain object feature, e.g. a certain color of clothes, These values may be arranged in a predetermined format, e.g. a vector or the like.

In order to compare two objects in different images, a distance or a difference value can be determined based on objects descriptors of different objects, wherein the computed distance or difference value may represent a similarity measure regarding the high-level similarity of two objects. Such comparison is based on the idea that the difference between a particular object feature of two objects in different images that have the same identity is smaller than the difference between a particular object feature of two objects in different images that have different identities. Re-identification algorithms based on deep learning may be used, including but not limited to re-identification algorithms that are based on local information extraction, distance metric learning or semantic attributes. An overview of state-of-the-art re-identification algorithms is given in the article by Hongbo Wang et al, A comprehensive overview of person re-identification approaches, March 2020, IEEE Access DOI:10.1109/ACCESS.2020.2978344.

For example, in case of an athlete, the object descriptor may represent an athlete in terms of object features of a person such as color of the clothes, long or short sleeves or pants, height, color of skin, long or short hair, color of the shoes, etc. Alternatively, in case of a vehicle, the object descriptor may represent a vehicle in terms of object features of a vehicle such as color of the vehicle, shape of the vehicle, numbers and/or characters on the vehicle, etc. Then, two objects may be compared by computing a distance (e.g. a difference) based on the object descriptors of the two objects. For example, a so-called cosine distance may be calculated, which may be a value between zero (not alike) and one (completely identical). The bigger the distance is, the bigger confidence that the object are the same.

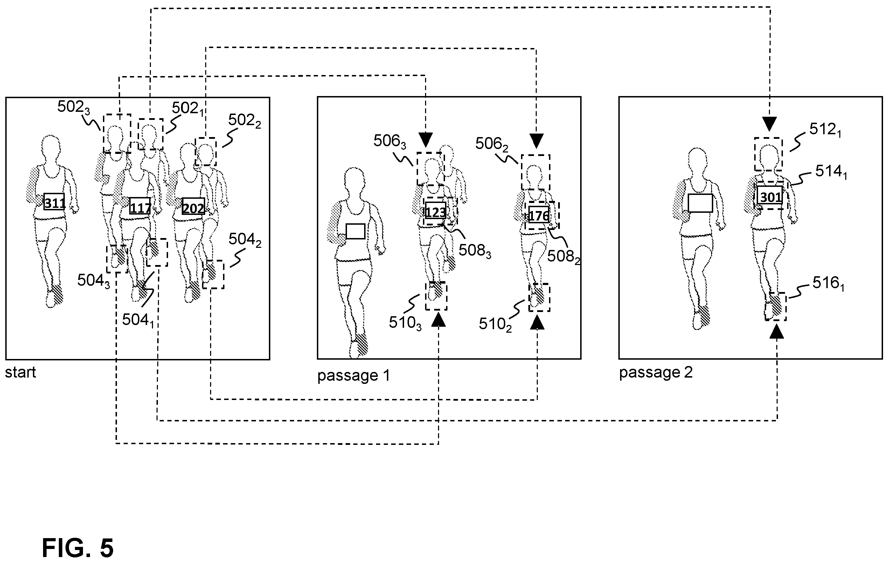

**Fig. 5** illustrates an example of a re-identification process based on object descriptors including object features related to specific facial features **502₁₋₃** and specific features of the shoes **504₁₋₃.** When comparing first non-identified object **520₁** in the first picture and a first object **524₁** in the second image based on object descriptors, a high confidence value may indicate that there is a high chance that the objects have the same or similar object feature. In the same way, comparison between objects based on object descriptors may show that there is a high similarity between second non-identified object **520₃** in the first image and a second object **524₃** in the second image and between a third non-identified object **520₂** in the first image and third object **524₂** in the third image. If the aggregated confidence values of two objects is above a certain threshold, the system may decide that the objects in the different images are the same. This way, identical objects in different images may be matched.

If the re-identification process determines that there is a match between the non-identified object in the first image and one of the objects in the second image, i.e. an non-identified object in the first image is similar (or identical) to an object in the second (or third) image, then the object in the second "matched" image may be used to identify the non-identified object. In an embodiment, an object identification algorithm that is executed by the server system may be used to identify the matched object using object identification schemes that may be similar to the ones described with reference to **Fig. 4**. As these algorithms run on a server system, the models may be more extensive than those that are executed locally at the computer of the timing system as the limitations regarding speed and computer resources (memory use and processor power) are less stringent for the server system.

In another embodiment, instead of the sever application executing an identification algorithm, the identification may be based on identification information that may be included in the second image information and sent to the server application. Thus, this embodiment takes advantage of the fact that the second camera system (which may be a second timing system) is capable of identifying objects that are detected in images. Hence, in that case, the second image information that is sent to the server system may include pictures of objects and identification information of identified pictures.

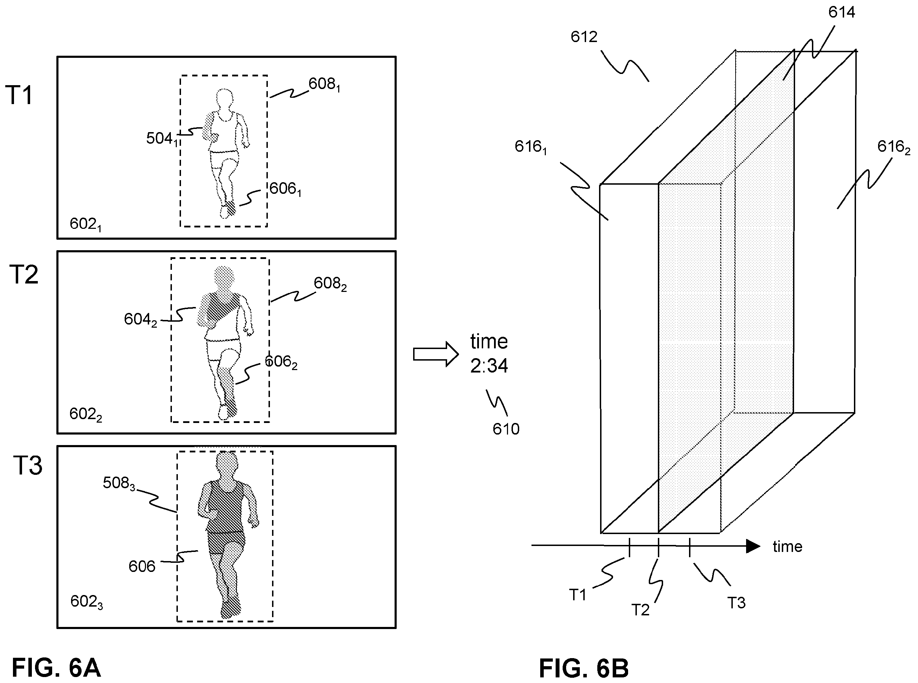

**Fig. 6A** and **6B** illustrate the working of a passing time module according to an embodiment. **Fig. 6A** shows three snapshots of a moving object (in this case an athlete) passing a 3D detection zone of a timing a system as described within reference to the embodiments of this application. The 3D detection zone may be set up using a calibration method as referred above with reference to **Fig.** 1. As shown in **Fig. 6B****,** the 3D detection zone **612** may include a virtual plane **614** located across the track wherein the normal of the virtual plane is substantially parallel to the direction of the sports track. The virtual plane divides the 3D detection zone in a first part **616₁** in which the object moves towards the virtual plane and crosses it and a second part **616₂** in which the moving object crosses the virtual plane and moves away from it.

Thus, when an object moves along the track, the 3D camera system will capture images (pairs of images in case of a stereo camera) of a scene that includes the 3D detection zone. For each image (video frame) the 3D image system may compute a depth map. An object detection and tracking algorithm may be used to detect and track a predetermined object, e.g. a human object or an object representing an object, in subsequent video frames.

Based on the depth maps, the computer may determine that a detected object enters the first part of the 3D detection zone. In that case, the computer may start storing video frames and associated depth maps in a buffer until the object leaves the 3D detection zone via the second part. In another embodiment, only the pairs of video frames are stored, and the depth maps are determined later. These video frames and depth maps may be used by the computer to determine a passing time and to identify the object associated with the passing time.

**Fig. 6A** depicts three samples **602₁₋₃** of a sequence of time-stamped video frames when the athlete moves through the 3D detection zone. These video frames that may be captured by the camera system and stored in the computer. As shown in **Fig. 6B****,** the first video frame **602₁** is captured at time instance T1, i.e. the time that most part of the body of the athlete was still in the first part **616₁** of the 3D detection zone. At time instance T2, a second video frame **602₂** is captured wherein the athlete moves further and passes the virtual plane **614** of the 3D detection zone. Finally, at time instance T3, a third video frame **602₃** is captured wherein the athlete has moved into the second part **616₂** of the 3D detection zone.

A passing time module in the computer of the timing system may analyse the sequence of time-stamped video frames to determine at what time instance the athlete has passed the virtual plane. To that end, an object detection and classification algorithm may be applied to each video frame. The algorithm may determine for example in the video frame region of interests **608₁₋₃** (ROIs) that belong to an object. Further, for each of these ROIs, the algorithm may classify pixels as belonging to the athlete or not (the background).

Further, a depth map associated with each of the video frames may be used to determine distance values belonging to pixels that are classified as belonging to the object. These distance values may be compared with the distance between the camera and the virtual plane. This way, when the 3D camera system captures an object crossing the virtual plane, for each video frame the part of the pixels of the object that have crossed the virtual plane can be determined. This is visible in the video frames of **Fig. 6A** wherein the grey areas define pixels of (parts of) the object that have crossed the virtual plane.

For the video frame at time instance T1 only pixels **604₁** representing part of a hand and pixels **606₁** representing a shoe of the athlete are associated with distance values smaller than the distance between the virtual plane and the 3D camera system. Similarly, for the video frame at time instance T2, pixels **604₁** representing part of the upper body and pixels **606₂** representing part of a leg are associated with distance values smaller than the distance between the virtual plane and the 3D camera system. Finally, for the video frame at T3 all pixels **608** representing the athlete are associated with distance values smaller than the distance between the virtual plane and the 3D camera system. Based on this analysis, the computer may determine that at T2, a substantial part of the body of the athlete has crossed the virtual plane. For example, the computer may determine that if a part of object that has crossed the virtual plane is larger than a certain threshold value that in that case, it is determined that the athlete has crossed the plane. Hence, the time-stamp T2 may in that case define the passing time **510,** in this example 2:34. Different rules may be defined in order to determine if an object has crossed the virtual plane.

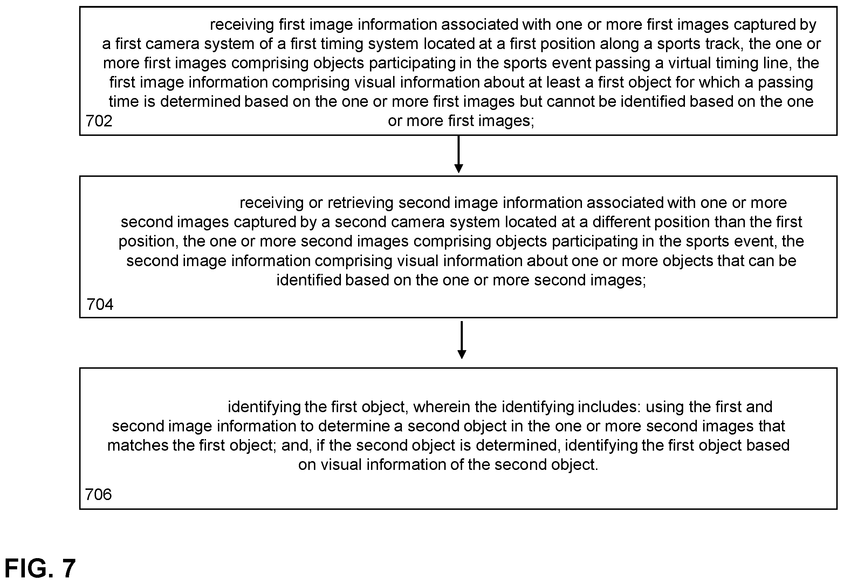

**Fig. 7** depicts a generic process flow of a method for timing and identifying objects passing a virtual timing line across a sports track that may be executed by the embodiments described in this application. The process may start with an application, preferably a server application, receiving first image information associated with one or more first images captured by a first camera system of a first timing system located at a first position along a sports track (step **702).** The first image may comprise objects, e.g. persons or vehicles, passing a virtual timing line. Further, the first image information may comprise visual information about at least a first object which cannot be identified based on the one or more first images.

In a similar way, the server application may receive second image information associated with one or more second images captured by a second camera system located at a different position than the first position (step **704).** The one or more second images may comprise objects participating in the sports event and the second image information comprising visual information about at least part of the objects in the one or more second images that can be identified based on the one or more second images. Hence, objects in the one or more second images are captured by different camera systems and taken from a different view angles and different focussing distances so that images are captured of the objects in which the identification markers (e.g. printed markers) or biometric identification markers, e.g. the face of a person are visible. This way, during the event, different images of each object in the event will be captured.

The server application may receive the one or more second images from the second camera system. Alternatively, the server application may retrieve the one or more second images from a storage medium, e.g. an image database, that is configured to store or buffer images of objects that participate in the event.

Based on the first and second image information, the server application may identify the first object that could not be identified. Here, the identification of the first object may include searching for a second object in the one or more second images that matches the first object in the one or more first images; and, identifying the first object based on visual information of the second object.

Here, the searching for the second object may be passed on object features of objects in the first and second images. For example, the server application may include determining one or more first object features associated with the first object; determining one or more second object features associated with objects in the second image; and, determining if one of the objects in the one or more second images matches the first object in the one or more first images based on the one or more first and second object features.

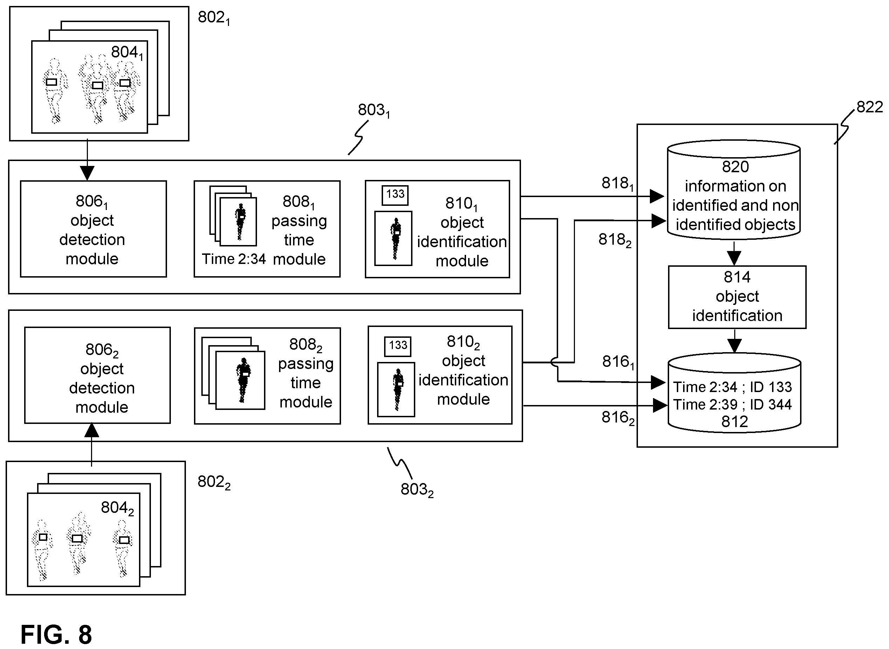

**Fig. 8** depicts a system for timing and identifying objects passing a virtual timing line according to an embodiment. The system may include a first vision-based timing system including a first camera system **802₁** connected first computer or a processor **803₁** that includes image processing modules for processing time-stamped first images **804₁** captured by the first camera system. The first timing system may be located along a track and communicatively connected, e.g. wirelessly connected, to a further computer system **822** in as similar way described with reference to **Fig. 1** and **2**. The further computer system may be configured as a network node, e.g. a server system or a cloud system. The first camera system may be configured to generate first images of objects passing a virtual timing line. Further, the first camera system may be configured to produce depth information (depth maps) associated with the first images which provide information regarding the relative distance between the camera system and objects passing the virtual timing line.

The image processing modules that are executed by the computer of the first timing system may include an object detection module **806₁** for detecting objects in the first images, a passing time module **808₁** for determining a passing time for detected objects and an object identification module **810₁** for identifying detected objects in the first images. Non-limiting examples of the image processing schemes that are executed by these modules are described in detail with reference to **Fig. 2-7****.** Although the modules are illustrated as separate modules each comprising a certain algorithm for performing a function in other embodiments, part of the functionality or all functionality of the modules may be integrated or combined in one module comprising an algorithm that is configured to provide the functionality of the integrated or combined modules.

Based on the information in the first images, the image processing modules may detect, time and identify at least a part of the objects that pass a virtual timing line in the images. For those objects, the first timing system may locally assign a passing time and an identity, e.g. a BIB number, to a detected object. First timing information **816₁** may be sent by the first computer to a database **812** that collects the timing information of the participants that participate in the event the first timing system is monitoring. The database may use the received identity to link the passing time to personal data, e.g. a name of the participant, that may be stored with the server system in a further registration database (not shown).

If the identification module of the first timing system does not succeed in identifying all objects that pass the virtual timing line in the images. Then, the first computer may send first image information associated with the first images **818₁** to the further computer system, which may include a storage medium **820** for (temporally) storing the first image information. The storage medium may be part of an image database for storing images that are captured by different camera systems connected to the sever system. The first image information may include at least visual information of the one or more timed objects that could not be identified. This visual information may include part of at least a first image, e.g. one or more pictures cropped out of one or more first images that comprise at least part of the one or more objects that could not be identified.

The first image information may further include metadata associated with the pictures of the non-identified objects, e.g. timing information related to the passing time that was determined by the passing time module, an identifier for enabling to distinguish between non-identified objects and other information that could be used by a server application to identify the non-identified objects based on further images captured by further camera systems. This information may for example include information about the resolution and/or format of the pictures.

In some embodiments, the image information may also include pictures of objects that were identified by the first timing system. These pictures and associated identification information, e.g. BIB number or vehicle number, may also be sent to the storage medium **820** and put in the image database. This way, the first timing system may send visual information, e.g. pictures, of both identified objects and non-identified objects to the sever system.

The system may include at least one further second camera system **802₂**, connected to a second computer **803₂** that may include image processing modules. For example, in an embodiment, the image processing modules may include at least an object detection module **806₂** and an object identification module **810₂**, for processing images **804₂** captured by the second camera system. In that case, the second computer may send second image information associated with the one or more second images to the server system, wherein the second image information may include pictures of detected objects and identification information of detected objects.

In a further embodiment, the second camera system may be part of a second timing system configured to time and identify objects passing a second timing line that is positioned at a second location along the track that is different from the position of the first timing system. In that case, the second computer may also include a passing time module **808₂** so the second timing system may send both second image information and timing information to the sever system. This way, image information on identified objects and non-identified objects may be stored in the storage medium **820** of the server system.

Then, a server application may include an object identification module **814** to identify non-identified objects that could not be identified on one or more first images on the basis of one or more second images. This identification process may use image re-identificaiton to match a non-identified object in one image captured with a first camera system with identified object in another image captured by another second camera system. Further, once a second object in second an image is found that matches the non-identified first object in a first image, then the second object may either be identified based on identification information that was provided by the further second camera system to the sever application or based on an object identification algorithm that is executed by the sever application.

The system depicted in **Fig. 8** illustrates a non-limiting example of an architecture wherein part of processing of the images is done locally by the computer of the timing system that is positioned along the tracks. Only the processing of the non-identifiable objects, which typically requires more computer-source intensive image processing, such as object re-identification, is performed on the server. It is note that other architectures are also possible, for example in an embodiment, the timing system only includes a camera system for generating images of objects passing a timing line and depth information. This information is transmitted, e.g. streamed, to a sever system which includes the image processing modules that are executed in **Fig. 8** by the computer of the timing system.

In a further, embodiment, at least part of the sever functionality depicted in **Fig. 8** may be implemented on a server that is associated with or integrated in one of the timing systems. For example, the computer of a timing system may include a server system running the server application. The timing system comprising the sever functionality may define a master timing system. All the other timing system along the track may connect to the master timing system in order to perform the object identification process as described with reference to the embodiments in this application. Such architecture may be especially suitable when the network of timing system may form a mesh network, wherein timing systems within a certain range may form a be configured to relay timing information and images for object identification towards the master timing system.

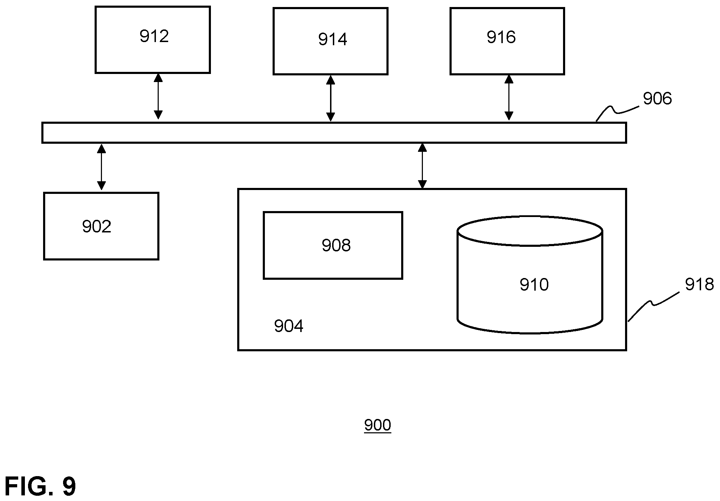

**Fig. 9** is a block diagram illustrating an exemplary data processing system that may be used for executing methods and software products described in this application. Data processing system **900** may include at least one processor **902** coupled to memory elements **904** through a system bus **906.** As such, the data processing system may store program code within memory elements **904.** Further, processor **902** may execute the program code accessed from memory elements **904** via system bus **906.** In one aspect, data processing system may be implemented as a computer that is suitable for storing and/or executing program code. It should be appreciated, however, that data processing system **900** may be implemented in the form of any system including a processor and memory that is capable of performing the functions described within this specification.

Memory elements **904** may include one or more physical memory devices such as, for example, local memory **908** and one or more bulk storage devices **910.** Local memory may refer to random access memory or other non-persistent memory device(s) generally used during actual execution of the program code. A bulk storage device may be implemented as a hard drive or other persistent data storage device. The processing system **900** may also include one or more cache memories (not shown) that provide temporary storage of at least some program code in order to reduce the number of times program code must be retrieved from bulk storage device **910** during execution.

Input/output (I/O) devices depicted as input device **912** and output device **914** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **916** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **900.**

As pictured in **FIG. 9****,** memory elements **904** may store an application **918.** It should be appreciated that data processing system **900** may further execute an operating system (not shown) that can facilitate execution of the application. Application, being implemented in the form of executable program code, can be executed by data processing system **900,** e.g., by processor **902.** Responsive to executing application, data processing system may be configured to perform one or more operations to be described herein in further detail.

In one aspect, for example, data processing system **900** may represent a client data processing system. In that case, application **918** may represent a client application that, when executed, configures data processing system **900** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **918,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. The embodiment was chosen and described in order to best explain the principles of the invention and the practical application, and to enable others of ordinary skill in the art to understand the invention for various embodiments with various modifications as are suited to the particular use contemplated.

## Claims

1. A method for timing and identifying objects participating in a sports event comprising:
receiving by a server system (822), first image information (818₁) associated with one or more first images (804₁) captured by a first camera system (802₁) of a first timing system located at a first position along a sports track, the one or more first images comprising objects associated a visual identification marker or identification code participating in the sports event passing a virtual timing line, the first camera system being connected to or comprising a first computer, the first computer including a first object detection module for detecting objects in the one or more first images, a passing time module for determining a passing time for the detected objects passing the virtual timing line and an object identification module for identifying the detected objects, the first image information comprising visual information of at least a first object which cannot be identified by the first object detection module based on the one or more first images, and timing information determined by the passing time module, the timing information comprising a passing time of the first object passing the virtual timing line;
receiving or retrieving by the server system (822), second image information (818₂) associated with one or more second images (804₂) captured by a second camera system (802₂) located at a different position than the first position, the one or more second images comprising objects participating in the sports event, the second image information comprising visual information about one or more objects that can be identified based on the one or more second images;
identifying by the server system (822), the first object, wherein the identifying includes: using the first image information (818₁) and second image information (818₂) to determine a second object associated a visual identification marker or code in the one or more second images that matches the first object, the determining being based on first non-biometric object features associated with the first object and second non-biometric object features associated with the second object; and, if the second object is determined, identifying the first object based on the visual identification marker or identification code of the second object; and,
storing the passing time of first object and the identity of the first object on a storage medium associated with the server system.

2. Method according to claim 1 wherein the first image information comprises at least part of one of the one or more first images comprising the first object or at least one picture of a first region of interest ROI in one of the one or more first images, the first ROI comprising at least part of the first object.

3. Method according to claims 1 or 2 wherein the first image information further comprises depth information indicative of a distance between the first camera system and the first object; and/or an identifier associated with the first ROI.

4. Method according to any of claims 1-3 wherein the determining a second object in the one or more second images is based on a re-identification algorithm, the re-identification algorithm being configured to compare the first object with the objects in the one or more second images based on object features.

5. Method according to any of claims 1-4 wherein the determining a second object in the one or more second images includes:
determining one or more first object features associated with the first object;
determining one or more second object features associated with objects in the second image; and,
determining if one of the objects in the one or more second images matches the first object in the one or more first images based on the one or more first and second object features.

6. Method according to claims 4 or 5 wherein the matching is based on a distance measure that is computed based on the first and second object features, the distance measure being indicative of a similarity between the first object and an object in the second image.

7. Method according to any of claims 4-6 wherein objects in the one or more first and second images represent persons participating in the sports event and wherein the first and second object features define features of a person such as color of the clothes, long or short sleeves or pants, height, color of skin, gender, long or short hair, color of the shoes; or, wherein objects in the one or more first and second image represent vehicles participating in the sports event and wherein the first and second object features define features of a vehicle such as color of the vehicle, shape of the vehicle, numbers and/or characters on the vehicle.

8. Method according to any of claims 1-7 wherein the identification of the first object further includes;
searching for a visual identification marker or a visual identification code based on visual information of the second object; and,
if a visual identification marker or visual identification code is found, transforming the identification marker or identification code into identification information for linking the second object to an identity, for example a name; and,
associating the first object with the identification information; and,
storing the identification information and the timing information of the first object in a database.

9. Method according to any of claims 1-7 wherein the second image information includes identification information associated with the second image; and, wherein the identification of the first object further includes;
associating the first object with the identification information; and,
storing the identification information and the timing information of the first object in a database.

10. Method according to any of claims 1-9 further comprising:
receiving timing information and identification information associated with objects in the one or more first images that have been detected, timed and identified by the first timing system based on the one or more first images.

11. Method according to any of claims 1-10 wherein the second camera system includes a computer or a processor that is configured to determine visual information about one or more objects that can be identified based on the one or more second images; and/or,
wherein the second camera system is part of a second timing system configured to determine passing times of objects participating in the sports event passing a virtual timing line; and/or,
wherein the first image information includes an image frame comprising the detected non-identified object or a ROI picture comprising the detected non-identified object that is cropped out of an image frame; and, optionally, a time stamp indicating a passing time of the detected non-identified object.

12. A system for timing and identifying objects participating in a sports event comprising:
a camera system (802₁) configured to capture images of a scene comprising objects on a sport track passing a virtual timeline at a first position along a race track; and, a computer connected to the camera system wherein the computer is configured to:
detect objects associated a visual identification marker or identification code in the images captured by the camera system;
determine depth information associated with images, the depth information defining a relative distance between the camera system and detected objects;
determine passing times at which detected objects pass the virtual timing line based on the timing information and the depth information;
identify detected objects based on a visual identification marker or identification code in the images; and, if an object cannot be detected based on the images, generating image information (818₁), the image information comprising visual information of the object that cannot be identified; and,
transmit the image information (818₁) and a passing time associated with the non-identified object to a server system (822) which is configured to identify the non-identified object using non-biometric object features based on the image information and further image information (818₁) associated with one or more further images (804₂) of objects associated a visual identification marker or identification code participating in the sports event captured by a further camera system located at a different position than the first position.

13. A system for timing and identifying objects participating in a sports event comprising:
a first timing system comprising a first camera system (802₁) connected to or comprising a first computer, wherein the first timing system is configured to generate first image information (818₁) associated with one or more first images (804₁) captured by the first camera system located at a first position along the sports track, the one or more first images comprising objects associated a visual identification marker or identification code passing the virtual timing line, the first computer including a first object detection module for detecting objects in the one or more first images, a passing time module for determining a passing time for the detected objects passing the virtual timing line and an object identification module for identifying the detected objects, the first image information comprising visual information of at least a first object which cannot be identified by the first object detection module based on the one or more first images, and timing information determined by the passing time module, the timing information comprising a passing time of the first object passing the virtual timing line;
one or more second camera systems, each camera system being connected to or comprising a second computer, wherein the one or more second camera systems are configured to generate second image information (818₂) associated with one or more second images (804₂) captured by the second camera system (802₂) located at a different position than the first position, the one or more second images comprising objects participating in the sports event, the second image information comprising visual information about one or more objects that can be identified based on the one or more second images; and,
a server system (822) configured to receive the first and second image information and to identify the first object, wherein the identification includes: using the first information and second image information to determine a second object associated a visual identification marker or identification code in the one or more second images that matches the first object, the determining being based on first non-biometric object features associated with the first object and second non-biometric object features associated with the second object; and, if the second object is determined, identifying the first object based on the visual identification marker or identification code of the second object; and,
a storage medium associated with the server system for storing the passing time of first object and the identity of the first object.

14. System according to claim 13, wherein the first timing system and the one or more second camera systems are configured to wirelessly communicate with the server system, preferably the first timing system and the one or more second camera systems forming a communications network.

15. A computer program or suite of computer programs comprising at least one software code portion or a computer program product storing at least one software code portion, the software code portion, when run on a computer of the system of claim 13, being configured for executing the method steps according any of claims 1-11.

## Patentansprüche

1. Verfahren zur Zeitmessung und zur Identifizierung von Objekten, die an einer Sportveranstaltung teilnehmen, umfassend:
Empfangen durch ein Serversystem (822) von ersten Bildinformationen (818₁), die einem oder mehreren ersten Bildern (804₁) zugeordnet sind, welche von einem ersten Kamerasystem (802₁) eines ersten Zeitmesssystems, das an einer ersten Position entlang einer Sportbahn angeordnet ist, aufgenommen wurden, wobei die ersten Bilder Objekte mit einer visuellen Kennzeichnung oder einem Identifikationscode umfassen, die an der Sportveranstaltung teilnehmen und eine virtuelle Zeitmesslinie passieren, wobei das erste Kamerasystem mit einem ersten Computer verbunden ist oder diesen umfasst, wobei der erste Computer ein erstes Objekterkennungsmodul zum Erkennen von Objekten in den ersten Bildern, ein Zeitmessmodul zur Bestimmung der Passierzeit der erkannten Objekte an der virtuellen Zeitmesslinie und ein Objektidentifizierungsmodul zur Identifizierung der erkannten Objekte umfasst, wobei die ersten Bildinformationen visuelle Informationen von mindestens einem ersten Objekt, das vom ersten Objekterkennungsmodul anhand der ersten Bilder nicht identifiziert werden kann, sowie Zeitinformationen, die vom Zeitmessmodul bestimmt werden, aufweisen, wobei die Zeitinformationen die Passierzeit des ersten Objekts an der virtuellen Zeitmesslinie umfassen;
Empfangen oder Abrufen durch das Serversystem (822) von zweiten Bildinformationen (818₂), die einem oder mehreren zweiten Bildern (804₂) zugeordnet sind, die von einem zweiten Kamerasystem (802₂) an einer anderen Position als der ersten aufgenommen wurden, wobei die zweiten Bilder Objekte zeigen, die an der Sportveranstaltung teilnehmen, und die zweiten Bildinformationen visuelle Informationen über ein oder mehrere Objekte umfassen, die anhand der zweiten Bilder identifiziert werden können;
Identifizieren durch das Serversystem (822) des ersten Objekts, wobei das Identifizieren umfasst: Verwenden der ersten Bildinformationen (818₁) und der zweiten Bildinformationen (818₂), um ein zweites Objekt zu bestimmen, das einem visuellen Identifikationsmarker oder Identifikationscode in den zweiten Bildern zugeordnet ist, der mit dem ersten Objekt übereinstimmt, wobei das Bestimmen auf ersten nicht-biometrischen Objektmerkmalen, die dem ersten Objekt zugeordnet sind, und zweiten nicht-biometrischen Objektmerkmalen, die dem zweiten Objekt zugeordnet sind, basiert; und, falls das zweite Objekt bestimmt wurde, Identifizieren des ersten Objekts anhand des visuellen Identifikationsmarkers oder Identifikationscodes des zweiten Objekts; und
Speichern der Passierzeit des ersten Objekts und der Identität des ersten Objekts auf einem dem Serversystem zugeordneten Speichermedium.

2. Verfahren nach Anspruch 1, wobei die erste Bildinformation mindestens einen Teil eines oder mehrerer erster Bilder, die das erste Objekt aufweisen, oder mindestens ein Bild eines ersten relevanten Bereichs (Region of Interest = ROI) in einem oder mehreren ersten Bildern umfasst, wobei der erste ROI mindestens einen Teil des ersten Objekts umfasst.

3. Verfahren nach Anspruch 1 oder 2, wobei die erste Bildinformation ferner Tiefeninformationen umfasst, die den Abstand zwischen dem ersten Kamerasystem und dem ersten Objekt angeben; und/oder eine dem ersten ROI zugeordnete Kennung.

4. Verfahren nach einem der Ansprüche 1 - 3, wobei das Bestimmen eines zweiten Objekts in dem einen oder den mehreren zweiten Bildern auf einem Reidentifizierungsalgorithmus basiert, der so konfiguriert ist, dass er das erste Objekt anhand von Objektmerkmalen mit den Objekten in dem einen oder den mehreren zweiten Bildern vergleicht.

5. Verfahren nach einem der Ansprüche 1 - 4, wobei das Bestimmen eines zweiten Objekts in dem einen oder den mehreren zweiten Bildern umfasst:
Bestimmen eines oder mehrerer erster Objektmerkmale, die dem ersten Objekt zugeordnet sind;
Bestimmen eines oder mehrerer zweiter Objektmerkmale, die Objekten im zweiten Bild zugeordnet sind; und
Bestimmen, ob eines der Objekte in dem einen oder den mehreren zweiten Bildern mit dem ersten Objekt in dem einen oder den mehreren ersten Bildern übereinstimmt, basierend auf den ersten und zweiten Objektmerkmalen.

6. Verfahren nach den Ansprüchen 4 oder 5, wobei das Abgleichen auf einem Distanzmaß beruht, das anhand der ersten und zweiten Objektmerkmale berechnet wird, wobei das Distanzmaß kennzeichnend für eine Ähnlichkeit zwischen dem ersten Objekt und einem Objekt im zweiten Bild ist.

7. Verfahren nach einem der Ansprüche 4 - 6, wobei die Objekte in dem einen oder den mehreren ersten und zweiten Bildern Personen darstellen, die an der Sportveranstaltung teilnehmen, und wobei die ersten und die zweiten Objektmerkmale Merkmale einer Person wie die Farbe der Kleidung, lange oder kurze Ärmel oder Hosen, Größe, Hautfarbe, Geschlecht, lange oder kurze Haare, die Farbe der Schuhe definieren; oder wobei die Objekte in dem einen oder den mehreren der ersten und zweiten Bilder Fahrzeuge darstellen, die an der Sportveranstaltung teilnehmen, und wobei die ersten und die zweiten Objektmerkmale Merkmale eines Fahrzeugs wie Farbe, Form, Nummern und/oder Zeichen auf dem Fahrzeug definieren.

8. Verfahren nach einem der Ansprüche 1 - 7, wobei das Identifizieren des ersten Objekts ferner umfasst:
Suchen nach einer visuellen Identifikationsmarkierung oder einem visuellen Identifikationscode basierend auf visuellen Informationen des zweiten Objekts; und,
falls eine visuelle Identifikationsmarkierung oder ein visueller Identifikationscode gefunden wird, Umwandeln der visuellen Identifikationsmarkierung oder des visuellen Identifikationscodes in Identifikationsinformationen, um das zweite Objekt mit einer Identität, beispielsweise einem Namen, zu verknüpfen; und
Verknüpfen des ersten Objekts mit den Identifikationsinformationen; und
Speichern der Identifikationsinformationen und der Zeitinformationen des ersten Objekts in einer Datenbank.

9. Verfahren nach einem der Ansprüche 1 - 7, wobei die Informationen des zweiten Bildes Identifikationsinformationen umfassen, die dem zweiten Bild zugeordnet sind; und wobei die Identifizierung des ersten Objekts ferner umfasst:
Verknüpfen des ersten Objekts mit den Identifikationsinformationen; und
Speichern der Identifikationsinformationen und der Zeitinformationen des ersten Objekts in einer Datenbank.

10. Verfahren nach einem der Ansprüche 1 - 9, ferner umfassend:
Empfangen von Zeitinformationen und Identifikationsinformationen, die Objekten in dem einen oder den mehreren ersten Bildern zugeordnet sind, welche vom ersten Zeiterfassungssystem basierend auf dem einen oder den mehreren ersten Bildern erkannt, zeitlich erfasst und identifiziert wurden.

11. Verfahren nach einem der Ansprüche 1 - 10, wobei das zweite Kamerasystem einen Computer oder einen Prozessor umfasst, der so konfiguriert ist, dass er visuelle Informationen über ein oder mehrere Objekte ermittelt, die anhand des einen oder der mehreren zweiten Bilder identifiziert werden können; und/oder wobei das zweite Kamerasystem Teil eines zweiten Zeitmesssystems ist, das so konfiguriert ist, dass es die Passierzeiten von Objekten ermittelt, die an der Sportveranstaltung teilnehmen, wobei sie eine virtuelle Zeitlinie passieren; und/oder
wobei die ersten Bildinformationen ein Einzelbild, welches das erkannte, nicht identifizierte Objekt aufweist, oder ein ROI-Bild, welches das erkannte, nicht identifizierte Objekt aufweist, das aus einem Einzelbild herausgeschnitten wurde; und wahlweise einen Zeitstempel umfassen, der die Passierzeit des erkannten, nicht identifizierten Objekts angibt.

12. System zur Zeitmessung und zur Identifizierung von Objekten, die an einer Sportveranstaltung teilnehmen, umfassend:
ein Kamerasystem (802₁), das so konfiguriert ist, dass es Bilder einer Szene aufnimmt, die Objekte auf einer Sportstrecke, die eine virtuelle Zeitlinie an einer ersten Position entlang einer Rennstrecke passieren, umfasst; und einen mit dem Kamerasystem verbundenen Computer, wobei der Computer konfiguriert ist zum:
Erkennen von Objekten, die in den vom Kamerasystem aufgenommenen Bildern mit einer visuellen Identifikationsmarkierung oder einem visuellen Identifikationscode verknüpft sind;
Ermitteln von Tiefeninformationen zu den Bildern, wobei die Tiefeninformationen eine relative Entfernung zwischen dem Kamerasystem und den erkannten Objekten definieren;
Ermitteln der Zeitpunkte, zu denen erkannte Objekte die virtuelle Zeitlinie passieren, basierend auf den Zeitinformationen und den Tiefeninformationen;
Identifizieren erkannter Objekte basierend auf einer visuellen Identifikationsmarkierung oder eines Identifikationscodes in den Bildern; und,
falls ein Objekt anhand der Bilder nicht erkannt werden kann, Generieren von Bildinformationen (818₁), wobei die Bildinformationen visuelle Informationen des nicht identifizierbaren Objekts umfassen; und
Übertragen der Bildinformationen (818₁) und eines dem nicht identifizierten Objekt zugeordneten Zeitpunkts an ein Serversystem (822), das so konfiguriert ist, dass es das nicht identifizierte Objekt unter Verwendung von nicht-biometrischen Objektmerkmalen auf Basis der Bildinformationen und weiterer Bildinformationen (818₁) identifiziert, die mit einem oder mehreren weiteren Bildern (804₂) von Objekten verknüpft sind, die mit einer visuellen Identifikationsmarkierung oder einem Identifikationscode an der Sportveranstaltung teilnehmen und von einem weiteren Kamerasystem an einer anderen Position als der ersten Position aufgenommen wurden.

13. System zur Zeitmessung und zur Identifizierung von Objekten bei einer Sportveranstaltung, umfassend:
ein erstes Zeitmesssystem mit einem ersten Kamerasystem (802₁), das mit einem ersten Computer verbunden ist oder einen solchen umfasst, wobei das erste Zeitmesssystem so konfiguriert ist, dass es erste Bildinformationen (818₁) generiert, die einem oder mehreren ersten Bildern (804₁) zugeordnet sind, die vom ersten Kamerasystem an einer ersten Position entlang der Sportstrecke aufgenommen wurden, wobei das eine oder die mehreren ersten Bilder Objekte zeigen, welchen eine visuelle Identifikationsmarkierung oder ein visueller Identifikationscode zugeordnet ist und welche die virtuelle Zeitlinie passieren, wobei der erste Computer umfasst ein erstes Objekterkennungsmodul zum Erkennen von Objekten in dem einen oder den mehreren ersten Bildern, ein Zeitmodul zum Ermitteln der Passierzeit für die erkannten Objekte, welche die virtuelle Zeitlinie passieren, und ein Objektidentifizierungsmodul zum Identifizieren der erkannten Objekte, wobei die ersten Bildinformationen visuelle Informationen von mindestens einem ersten Objekt, das vom ersten Objekterkennungsmodul anhand der ersten Bilder nicht identifiziert werden kann, und Zeitinformationen, die vom Zeitmodul bestimmt wurden, umfassen, wobei die Zeitinformationen die Passierzeit des ersten Objekts, welches die virtuelle Zeitlinie passiert, umfassen;
ein oder mehrere zweite Kamerasysteme, wobei jedes Kamerasystem mit einem zweiten Computer verbunden ist oder einen solchen umfasst, wobei das eine oder die mehreren zweiten Kamerasysteme so konfiguriert sind, dass sie zweite Bildinformationen (818₂) generieren, die mit einem oder mehreren zweiten Bildern (804₂) verknüpft sind, die von dem zweiten Kamerasystem (802₂) an einer anderen Position als der ersten Position aufgenommen wurden, wobei das eine oder die mehreren zweiten Bilder Objekte aufweisen, die an der Sportveranstaltung teilnehmen, wobei die Informationen der zweiten Bilder visuelle Informationen über ein oder mehrere Objekte aufweisen, die anhand des einen oder der mehreren zweiten Bilder identifiziert werden können; und
ein Serversystem (822), das so konfiguriert ist, dass es die Informationen zu den ersten und den zweiten Bildern empfängt und das erste Objekt identifiziert, wobei die Identifizierung umfasst: Verwenden der ersten Bildinformationen und der zweiten Bildinformationen, um ein zweites Objekt zu erkennen, das mit einer visuellen Identifikationsmarkierung oder einem visuellen Identifikationscode in dem einen oder den mehreren zweiten Bildern verknüpft ist, die/der mit dem ersten Objekt übereinstimmt, wobei das Bestimmen auf ersten nicht-biometrischen Objektmerkmalen, die dem ersten Objekt zugeordnet sind, und zweiten nicht-biometrischen Objektmerkmalen, die dem zweiten Objekt zugeordnet sind, basiert; und, falls das zweite Objekt erkannt wird, Identifizieren des ersten Objekts anhand der visuellen Identifikationsmarkierung oder des visuellen Identifikationscodes des zweiten Objekts; und
ein Speichermedium, das mit dem Serversystem verbunden ist, um die Passierzeit des ersten Objekts und die Identität des ersten Objekts zu speichern.

14. System nach Anspruch 13, wobei das erste Zeitmesssystem und das eine oder die mehreren zweiten Kamerasysteme konfiguriert sind, um drahtlos mit dem Serversystem zu kommunizieren, wobei vorzugsweise das erste Zeitmesssystem und das eine oder die mehreren zweiten Kamerasysteme ein Kommunikationsnetzwerk bilden.

15. Computerprogramm oder eine Computerprogrammsuite, umfassend mindestens einen Softwarecodeabschnitt oder ein Computerprogrammprodukt, das mindestens einen Softwarecodeabschnitt speichert, wobei der Softwarecodeabschnitt, wenn er auf einem Computer des Systems nach Anspruch 13 ausgeführt wird, so konfiguriert ist, dass er die Verfahrensschritte nach einem beliebigen der Ansprüche 1 - 11 ausführt.

## Revendications

1. Procédé de chronométrage et d'identification d'objets participant à un événement sportif, comprenant :
la réception, par un système serveur (822), de premières informations d'image (818₁) associées à une ou plusieurs premières images (804₁) capturées par un premier système de caméra (802₁) d'un premier système de chronométrage situé à une première position le long d'une piste sportive, lesdites une ou plusieurs premières images comprenant des objets associés à un marqueur ou code d'identification visuelle d'un objet participant à l'événement sportif qui franchit une ligne de chronométrage virtuelle, le premier système de caméra étant connecté à un premier ordinateur ou comprenant celui-ci, le premier ordinateur incluant un premier module de détection d'objets pour détecter des objets dans lesdites une ou plusieurs premières images, un module de temps de passage pour déterminer un temps de passage pour les objets détectés qui franchissent la ligne de chronométrage virtuelle, et un module d'identification d'objets pour identifier les objets détectés, les premières informations d'image comprenant des informations visuelles sur au moins un premier objet qui ne peut pas être identifié par le premier module de détection d'objets sur la base desdites une ou plusieurs premières images, et des informations de chronométrage déterminées par le module de temps de passage, les informations de chronométrage comprenant un temps de passage du premier objet qui franchit la ligne de chronométrage virtuelle ;
la réception ou la récupération, par le système serveur (822), de deuxièmes informations d'image (818₂) associées à une ou plusieurs deuxièmes images (804₂) capturées par un deuxième système de caméra (802₂) situé à une position différente de la première position, lesdites une ou plusieurs deuxièmes images comprenant des objets participant à l'événement sportif, les deuxièmes informations d'image comprenant des informations visuelles concernant un ou plusieurs objets qui peuvent être identifiés sur la base desdites une ou plusieurs deuxièmes images ;
l'identification, par le système serveur (822), du premier objet, dans lequel l'identification inclut : l'utilisation des premières informations d'image (818₁) et des deuxièmes informations d'image (818₂) pour déterminer un deuxième objet associé à un marqueur ou code d'identification visuelle dans lesdites une ou plusieurs deuxièmes images qui correspond au premier objet, la détermination étant basée sur des premières caractéristiques d'objet non biométriques associées au premier objet et sur des deuxièmes caractéristiques d'objet non biométriques associées au deuxième objet ; et si le deuxième objet est déterminé, l'identification du premier objet sur la base du marqueur ou code d'identification visuelle du deuxième objet ; et
l'enregistrement du temps de passage du premier objet et de l'identité du premier objet sur un support d'enregistrement associé au système serveur.

2. Procédé selon la revendication 1, dans lequel les premières informations d'image comprennent au moins une partie de l'une desdites une ou plusieurs premières images comprenant le premier objet ou au moins une image d'une première région d'intérêt, ROI - Region Of Interest, dans l'une desdites une ou plusieurs premières images, la première ROI comprenant au moins une partie du premier objet.

3. Procédé selon la revendication 1 ou 2, dans lequel les premières informations d'image comprennent en outre des informations de profondeur indiquant une distance entre le premier système de caméra et le premier objet ; et/ou un identifiant associé à la première ROI.

4. Procédé selon l'une quelconque des revendications 1 à 3, dans lequel la détermination d'un deuxième objet dans lesdites une ou plusieurs deuxièmes images est basée sur un algorithme de ré-identification, l'algorithme de ré-identification étant configuré pour comparer le premier objet aux objets présents dans lesdites une ou plusieurs deuxièmes images sur la base de caractéristiques d'objet.

5. Procédé selon l'une quelconque des revendications 1 à 4, dans lequel la détermination d'un deuxième objet dans lesdites une ou plusieurs deuxièmes images inclut :
la détermination d'une ou plusieurs premières caractéristiques d'objet associées au premier objet ;
la détermination d'une ou plusieurs deuxièmes caractéristiques d'objet associées à des objets de la deuxième image ; et
la détermination du fait que l'un des objets présents dans lesdites une ou plusieurs deuxièmes images correspond au premier objet présent dans lesdites une ou plusieurs premières images sur la base desdites une ou plusieurs premières et deuxièmes caractéristiques d'objet.

6. Procédé selon la revendication 4 ou 5, dans lequel la mise en correspondance est basée sur une mesure de distance calculée sur la base des premières et deuxièmes caractéristiques d'objet, la mesure de distance étant indicative d'une similarité entre le premier objet et un objet dans la deuxième image.

7. Procédé selon l'une quelconque des revendications 4 à 6, dans lequel les objets figurant sur lesdites une ou plusieurs premières et deuxièmes images représentent des personnes participant à l'événement sportif, et dans lequel les premières et deuxièmes caractéristiques d'objet définissent des caractéristiques d'une personne telles que la couleur des vêtements, la longueur des manches ou des pantalons, la taille, la couleur de peau, le sexe, la longueur des cheveux ou la couleur des chaussures ; ou dans lequel les objets figurant sur lesdites une ou plusieurs premières et deuxièmes images représentent des véhicules participant à l'événement sportif et dans lequel les premières et deuxièmes caractéristiques d'objet définissent des caractéristiques d'un véhicule telles que la couleur du véhicule, la forme du véhicule, ou des numéros et/ou caractères figurant sur le véhicule.

8. Procédé selon l'une quelconque des revendications 1 à 7, dans lequel l'identification du premier objet inclut en outre :
la recherche d'un marqueur ou code d'identification visuelle sur la base d'informations visuelles sur le deuxième objet ; et
si un marqueur ou code d'identification visuelle est trouvé, la transformation du marqueur ou code d'identification en informations d'identification pour relier le deuxième objet à une identité, par exemple à un nom ; et
l'association du premier objet aux informations d'identification ; et
l'enregistrement des informations d'identification et des informations de chronométrage du premier objet dans une base de données.

9. Procédé selon l'une quelconque des revendications 1 à 7, dans lequel les deuxièmes informations d'image incluent des informations d'identification associées à la deuxième image ; et dans lequel l'identification du premier objet inclut en outre :
l'association du premier objet aux informations d'identification ; et
l'enregistrement des informations d'identification et des informations de chronométrage du premier objet dans une base de données.

10. Procédé selon l'une quelconque des revendications 1 à 9, comprenant en outre :
la réception d'informations de chronométrage et d'informations d'identification associées à des objets dans lesdites une ou plusieurs premières images qui ont été détectées, synchronisées et identifiées par le premier système de chronométrage sur la base desdites une ou plusieurs premières images.

11. Procédé selon l'une quelconque des revendications 1 à 10,
dans lequel le deuxième système de caméra inclut un ordinateur ou un processeur configuré pour déterminer des informations visuelles concernant un ou plusieurs objets qui peuvent être identifiés sur la base desdites une ou plusieurs deuxièmes images ; et/ou
dans lequel le deuxième système de caméra fait partie d'un deuxième système de chronométrage configuré pour déterminer les temps de passage d'objets participant à l'événement sportif qui franchissent une ligne de chronométrage virtuelle ; et/ou
dans lequel les premières informations d'image incluent une trame d'image comprenant l'objet non identifié détecté ou une image de ROI comprenant l'objet non identifié détecté qui est recadrée dans une trame d'image ; et, facultativement, un horodatage indiquant un temps de passage de l'objet non identifié détecté.

12. Système de chronométrage et d'identification d'objets participant à un événement sportif, comprenant :
un système de caméra (802₁) configuré pour capturer des images d'une scène comprenant des objets sur une piste sportive qui franchissent une ligne temporelle virtuelle à une première position le long d'une piste de course ; et
un ordinateur connecté au système de caméra, dans lequel l'ordinateur est configuré pour :
détecter des objets associés à un marqueur ou code d'identification visuelle dans les images capturées par le système de caméra ;
déterminer des informations de profondeur associées aux images, les informations de profondeur définissant une distance relative entre le système de caméra et les objets détectés ;
déterminer les temps de passage des objets détectés par la ligne de chronométrage virtuelle sur la base des informations de chronométrage et des informations de profondeur ;
identifier des objets détectés sur la base d'un marqueur ou code d'identification visuelle dans les images ; et si un objet ne peut pas être détecté sur la base des images, générer des informations d'image (818₁), les informations d'image comprenant des informations visuelles sur l'objet qui ne peut pas être identifié ; et
transmettre les informations d'image (818₁) et un temps de passage associé à l'objet non identifié à un système serveur (822) qui est configuré pour identifier l'objet non identifié à l'aide de caractéristiques d'objet non biométriques sur la base des informations d'image et d'informations d'image additionnelles (818₁) associées à une ou plusieurs images additionnelles (804₂) d'objets associés à un marqueur ou code d'identification visuelle d'un objet participant à l'événement sportif capturé par un système de caméra additionnel situé à une position différente de la première position.

13. Système de chronométrage et d'identification d'objets participant à un événement sportif, comprenant :
un premier système de chronométrage comprenant un premier système de caméra (802₁) connecté à un premier ordinateur ou comprenant celui-ci, dans lequel le premier système de chronométrage est configuré pour générer des premières informations d'image (818₁) associées à une ou plusieurs premières images (804₁) capturées par le premier système de caméra situé à une première position le long de la piste sportive, lesdites une ou plusieurs premières images comprenant des objets associés à un marqueur ou code d'identification visuelle qui franchissent la ligne de chronométrage virtuelle, le premier ordinateur incluant un premier module de détection d'objets pour détecter des objets dans lesdites une ou plusieurs premières images, un module de temps de passage pour déterminer un temps de passage pour les objets détectés qui franchissent la ligne de chronométrage virtuelle, et un module d'identification d'objets pour identifier les objets détectés, les premières informations d'image comprenant des informations visuelles sur au moins un premier objet qui ne peut pas être identifié par le premier module de détection d'objets sur la base desdites une ou plusieurs premières images, et des informations de chronométrage déterminées par le module de temps de passage, les informations de chronométrage comprenant un temps de passage du premier objet qui franchit la ligne de chronométrage virtuelle ;
un ou plusieurs deuxièmes systèmes de caméra, chaque système de caméra étant connecté à un deuxième ordinateur ou comprenant celui-ci, dans lequel lesdits un ou plusieurs deuxièmes systèmes de caméra sont configurés pour générer des deuxièmes informations d'image (818₂) associées à une ou plusieurs deuxièmes images (804₂) capturées par le deuxième système de caméra (802₂) situé à une position différente de la première position, lesdites une ou plusieurs deuxièmes images comprenant des objets participant à l'événement sportif, les deuxièmes informations d'image comprenant des informations visuelles sur un ou plusieurs objets qui peuvent être identifiés sur la base desdites une ou plusieurs deuxièmes images ; et
un système serveur (822) configuré pour recevoir les premières et deuxièmes informations d'image et pour identifier le premier objet, dans lequel l'identification inclut : l'utilisation des premières et deuxièmes informations d'image pour déterminer un deuxième objet associé à un marqueur ou code d'identification visuelle dans lesdites une ou plusieurs deuxièmes images qui correspond au premier objet, la détermination étant basée sur des premières caractéristiques d'objet non biométriques associées au premier objet et sur des deuxièmes caractéristiques d'objet non biométriques associées au deuxième objet ; et si le deuxième objet est déterminé, l'identification du premier objet sur la base du marqueur ou code d'identification visuelle du deuxième objet ; et
un support d'enregistrement associé au système serveur pour enregistrer le temps de passage du premier objet et l'identité du premier objet.

14. Système selon la revendication 13, dans lequel le premier système de chronométrage et lesdits un ou plusieurs deuxièmes systèmes de caméra sont configurés pour communiquer sans fil avec le système serveur, le premier système de chronométrage et lesdits un ou plusieurs deuxièmes systèmes de caméra formant de préférence un réseau de communication.

15. Programme informatique ou suite de programmes informatiques comprenant au moins une portion de code logiciel ou un produit de programme informatique sur lequel est enregistrée au moins une portion de code logiciel, la portion de code logiciel, lorsqu'elle est exécutée sur un ordinateur du système selon la revendication 13, étant configurée pour exécuter les étapes du procédé selon l'une quelconque des revendications 1 à 11.
